(19) Europäisches Patentamt
European Patent Office
Office européen des brevets

(11) EP 3 405 540 B1

(12) **EUROPÄISCHE PATENTSCHRIFT**

(45) Veröffentlichungstag und Bekanntmachung des Hinweises auf die Patenterteilung:
**22.04.2020 Patentblatt 2020/17**

(21) Anmeldenummer: **17700213.6**

(22) Anmeldetag: **10.01.2017**

(51) Int Cl.:
***C09J 4/00*** (2006.01) ***C09J 133/06*** (2006.01)
***B32B 27/30*** (2006.01) ***C08J 5/18*** (2006.01)

(86) Internationale Anmeldenummer:
**PCT/EP2017/050365**

(87) Internationale Veröffentlichungsnummer:
**WO 2017/125277 (27.07.2017 Gazette 2017/30)**

(54) **VERWENDUNG EINES EINKOMPONENTIGEN LAMINIERKLEBSTOFFS ZUR VERBUNDFOLIENKASCHIERUNG**

USE OF A SINGLE-COMPONENT LAMINATING ADHESIVE FOR COMPOSITE FILM LAMINATION

UTILISATION D'UN ADHÉSIF DE STRATIFICATION MONOCOMPOSANT POUR LE CONTRECOLLAGE DE FILMS COMPOSITES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.01.2016 EP 16151707**

(43) Veröffentlichungstag der Anmeldung:
**28.11.2018 Patentblatt 2018/48**

(73) Patentinhaber: **BASF SE**
**67056 Ludwigshafen am Rhein (DE)**

(72) Erfinder:
- **SCHUMACHER, Karl-Heinz**
  **67056 Ludwigshafen (DE)**
- **TONHAUSER, Christine**
  **67056 Ludwigshafen (DE)**
- **KIENER, Christoph**
  **67056 Ludwigshafen (DE)**
- **PREISHUBER-PFLUEGL, Peter**
  **67056 Ludwigshafen (DE)**
- **KUNTZ, Andrea**
  **67056 Ludwigshafen (DE)**

(74) Vertreter: **BASF IP Association**
**BASF SE**
**G-FLP-C006**
**67056 Ludwigshafen (DE)**

(56) Entgegenhaltungen:
**EP-A1- 2 636 714**
**WO-A1-2006/066761**
**JP-A- H 082 538**
**US-A- 4 609 420**
**US-A1- 2004 168 762**
**US-A1- 2005 192 394**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft die Verwendung eines bestimmten einkomponentigen Laminierklebstoffs zur Verbundfolienkaschierung sowie ein Verfahren zur Verbundfolienkaschierung. Die Verbundfolien können besonders vorteilhaft für die Verpackung von Lebensmitteln verwendet werden.

Es besteht ein großer Bedarf an kostengünstigen Klebstoffen für die Verbundfolienkaschierung mit guten anwendungstechnischen Eigenschaften, z.B. für flexible Nahrungsmittelverpackungen. In dieser Anwendung weit verbreitet sind Klebstoffsysteme auf Basis von organischen Lösungsmitteln. Zur Reduzierung von organischen Lösemittelemissionen stellen wasserbasierte Klebstoffsysteme eine Alternative dar. Besondere Bedeutung haben Acrylatesterpolymerdispersionen, auch bekannt als Acrylatlatex. Auf Acrylatester basierte Klebstoffe sind z.B. beschrieben in WO 98/23656 und in WO 00/50480, JP H08 2538 A, US 2004/168762 A1, US 2005/192394 A1 und EP 2 636 714 A1.

In zahlreichen Anwendungen wird vom verwendeten Klebstoff eine hohe Beständigkeit gegenüber Wärme verlangt, z.B. in Folienlaminaten für Heißabfüllprozesse oder für sterilisierbare oder pasteurisierbare Lebensmittelverpackungen. Außerdem erfordern zahlreiche Laminate einen Klebstoff mit einer hohen Beständigkeit gegenüber Chemikalien, die aus Druckfarben, die mit dem Klebstoff im direkten Kontakt stehen, stammen oder gegenüber Chemikalien, die aus dem verpackten Füllgut durch die innere Folien in den Klebstoff wandern können. Bei der Verwendung von wässrigen Klebstoffen wird diese erforderliche Wärme- und Chemikalienbeständigkeit heute üblicherweise durch Einmischen eines externen chemischen Vernetzers in die Dispersion erzeugt. Insbesondere wasseremulgierbare Isocyanate finden hier Verwendung. Ein solches zweikomponentiges Klebstoffsystem hat in der Regel den Nachteil einer begrenzten Topfzeit, innerhalb der der Klebstoff verarbeitet werden muss. Sie liegt in der Regel zwischen einer und zehn Stunden. Wird diese Topfzeit überschritten, besteht das Risiko einer Koagulatbildung im Klebstoff und das Risiko eines Anstieges der Viskosität, die zu Problemen bei der industriellen Beschichtung des Klebstoffs auf einem Folienträger führen kann. Zudem besteht bei solchen zweikomponentigen Klebstoffen die Gefahr, dass beim Vermischen Mischungsfehler auftreten, die eine effektive Vernetzung des Klebstoffs beeinträchtigen.

Als Verbesserung der Haftung von aus dem Wässerigen aufgetragenen Klebstoffschichten auf Olefinoberflächen ist der Zusatz einer Dihydrazidkomponente zur Dispersion aus EP148386 bekannt. WO2006/066761 beschreibt keto- oder aldehydfunktionalisierte Emulsionspolymerisate, die mit einer zweiten Komponente, die sich im Dispersionsserum befindet, bei der Verfilmung vernetzend reagiert und für selbstklebende, leicht wiederablösbare Weich-PVC-Folien verwendet wird. Die dort beschriebenen Emulsionspolymerisate werden als Haftklebstoffe (PSA) eingesetzt und zeichnen sich durch eine vergleichsweise hohe Filmklebrigkeit aus. Die Filmklebrigkeit kann als Loop-Tack beschrieben werden. Der Loop-Tack auf Stahl liegt üblicherweise bei deutlich über 1,7 N / 25 mm und kann bis zu 10 N / 25 mm betragen. Laminierklebstoffe bzw. Dispersionen für die Anwendung in der Verbundfolienkaschierung sind keine Haftklebstoffe, sie nicht oder nur sehr wenig klebrig, d.h. sie weisen einen Loop Tack von vorzugsweise weniger als 1,7 N / 25 mm auf Stahl auf.

Das Aufgabe der vorliegenden Erfindung bestand darin, einen einkomponentigen wässerigen Laminierklebstoff für die Verbundfolienkaschierung zugänglich zu machen, der eine Wärme- und Chemikalienbeständigkeit aufweist, wie sie mit üblichen zweikomponentigen wässerigen Klebstoffen für diese Anwendungen erzielt werden und zu festen Folienverbunden führt, die nicht leicht voneinander wiederabziehbar sind.

Es wurde gefunden, dass die Aufgabe gelöst werden kann durch Verwendung des nachfolgend näher erläuterten Laminierklebstoffs. Gegenstand der Erfindung ist die Verwendung eines einkomponentigen Laminierklebstoffs zur Verbundfolienkaschierung,

wobei der Laminierklebstoff in Form einer wässrigen Polymerdispersion vorliegt und die wässrige Polymerdispersion in Wasser dispergierte Polymerpartikel enthält, herstellbar durch radikalische Emulsionspolymerisation von Monomeren umfassend

a) mindestens 60 Gew.%, bezogen auf die Gesamtmenge an Monomeren, mindestens eines Monomeren ausgewählt aus der Gruppe bestehend aus C1- bis C20-Alkylacrylaten, C1- bis C20-Alkylmethacrylaten, Vinylestern von bis zu 20 C-Atome enthaltenden Carbonsäuren, Vinylaromaten mit bis zu 20 C-Atomen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen und Mischungen dieser Monomere und

b) mindestens 0,1 Gew.%, bezogen auf die Gesamtmenge an Monomeren, mindestens eines Monomeren mit mindestens einer Säuregruppe, und

c) 0,1 bis 5 Gew.%, bevorzugt 0,5 bis 5 Gew.%, bezogen auf die Gesamtmenge an Monomeren, mindestens einer ethylenisch ungesättigten Verbindung mit mindestens einer funktionellen Gruppe, ausgewählt aus Ketogruppen und Aldehydgruppen; wobei bei der Emulsionspolymerisation weniger als 1 Gewichtsteil Emulgator auf 100 Gewichtsteile Monomere eingesetzt wird;

wobei die wässerige Polymerdispersion mindestens eine Verbindung A enthält, welche mindestens zwei funktionelle

Gruppen aufweist, die mit den Ketogruppen oder mit den Aldehydgruppen eine Vernetzungsreaktion eingehen können; wobei das Molverhältnis der mit Ketogruppen oder mit Aldehydgruppen reaktiven Gruppen der Verbindung A zu den Keto- und Aldehydgruppen des Monomers c) von 1:10 bis 2:1 beträgt;
wobei bei der Verbundfolienkaschierung mindestens zwei Folien mit dem Laminierklebstoff derart fest miteinander verklebt sind, dass die Schälfestigkeit 2,5 N / 15 mm oder mehr, oder 3 N/15 mm, oder mehr beträgt oder dass die miteinander verklebten Folien nur unter Zerstörung mindestens einer der Folien trennbar sind.

Die erfindungsgemäße wässerige Polymerdispersion enthält ferner eine Verbindung, welche mindestens zwei funktionelle Gruppen beinhaltet, die mit der Keto- oder Aldehydgruppe eine Vernetzungsreaktion eingehen kann. Für eine optimale Vernetzung wird die Menge dieser zweiten Komponente so gewählt, dass ein Molekül der zweiten Komponente mit zwei Keto- oder Aldehydfunktionen der ersten Komponente eine verbrückende chemische Verbindung aufbaut.

Gegenstand der Erfindung ist auch ein Verfahren zur Herstellung von Verbundfolien wobei mindestens zwei Folien unter Verwendung des einkomponentigen, nicht selbstklebenden Laminierklebstoffs bzw. unter Verwendung der wässrige Polymerdispersion miteinander verklebt werden, vorzugsweise unter Anwendung von Druck und erhöhter Temperatur.

Gegenstand der Erfindung ist auch die Verwendung der erfindungsgemäß erhältlichen Verbundfolien für die Verpackung von Lebensmitteln, vorzugsweise in flexiblen Verpackungen.

Gegenstand der Erfindung ist auch die Verwendung der wässrigen Polymerdispersion als Klebstoff, insbesondere als Laminierklebstoff, z.B. zur Herstellung von Verbundfolien für die Verpackung von Lebensmitteln.

Gegenstand der Erfindung ist auch eine Verbundfolie, welche eine erste und mindestens eine zweite Folie aufweist, welche miteinander verklebt sind unter Verwendung des hierin beschriebenen Laminierklebstoffs enthaltend eine erfindungsgemäß einzusetzende wässrige Polymerdispersion.

Im Folgenden werden gelegentlich die Bezeichnung "(Meth)acryl..." und ähnliche Bezeichnungen als abkürzende Schreibweise verwendet für "Acryl... oder Methacryl...". In der Bezeichnung Cx-Alkyl(meth)acrylat und analogen Bezeichnungen bedeutet x die Anzahl der C-Atome der Alkylgruppe.

Die Glasübergangstemperatur kann durch Differential Scanning Calorimetrie (ASTM D 3418-08, sogenannte "midpoint temperature") bestimmt werden. Die Glasübergangstemperatur des Polymerisats der Polymerdispersion ist die bei Auswertung der zweiten Heizkurve (Heizrate 20° C/min) erhaltene Glasübergangstemperatur.

Einkomponentige Klebstoffe sind Klebstoffe, bei denen unmittelbar vor deren Anwendung kein externer Vernetzer (wie z.B. Isocyanatvernetzer) zugegeben wird. Vorzugsweise erfolgt bei der Verbundfolienherstellung auch keine UV-Vernetzung und der Laminierklebstoffe enthält vorzugsweise keine UV-vernetzbaren Komponenten.

Der Laminierklebstoff ist vorzugsweise nicht selbstklebend. Nicht selbstklebende Klebstoffe sind Klebstoffe, die im Unterschied zu Haftklebstoffen keine oder nur eine sehr geringe Klebrigkeit bei Raumtemperatur aufweisen und vorzugsweise unter Anwendung von Druck und/oder erhöhter Temperatur angewendet werden. Die Klebrigkeit gemessen als Loop Tack beträgt vorzugsweise weniger als 1,7 N / 25 mm (Klebstoff in einer Auftragsstärke von 20 $\mu$m aufgetragen auf einer 12 $\mu$m starken Polyesterfolie, gemessen auf Stahl bei Raumtemperatur (20 °C) mit einer Abzugsgeschwindigkeit von 300 mm/min).

Die erfindungsgemäß verwendeten Polymerdispersionen sind durch radikalische Emulsionspolymerisation von ethylenisch ungesättigten, radikalisch polymerisierbaren Verbindungen (Monomeren) erhältlich.

Die Polymerisation erfolgt dabei bevorzugt emulgatorfrei oder emulgatorarm in dem Sinne, dass weniger als 1 Gewichtsteil Emulgator oder weniger als 0,8 Gewichtsteile, vorzugsweise kleiner oder gleich 0,5 Gewichtsteile Emulgator, bezogen auf 100 Gewichtsteile Monomere, zur Stabilisierung der erfindungsgemäßen Polymerdispersion zugesetzt werden. Emulgatoren sind der Polymerisationsmischung vor oder nach der Polymerisation zugesetzte, nichtpolymere, amphiphile, oberflächenaktive Substanzen. Geringe Mengen an Emulgatoren, die z.B. durch die Verwendung von emulgatorstabilisierter Polymersaat bedingt sind, sind dabei unschädlich. Es kann auch insgesamt weniger als 0,3 Gew.-Teile oder weniger als 0,2 Gew.-Teile Emulgator, z.B. von 0,05 bis weniger als 1 Gew.-Teile, von 0,05 bis weniger als 0,8 Gew.-Teile, von 0,05 bis 0,5 Gew.-Teile, oder von 0,05 bis 0,3 Gew.-Teile bezogen auf 100 Gewichtsteile Monomere oder kein Emulgator verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als grenzflächenaktive Substanzen Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest: $C_8$- bis $C_{36}$), ethoxylierte Mono-, Di- und Trialkylphenole (EO-Grad: 3 bis 50, Alkylrest: $C_4$- bis $C_9$), Alkalimetallsalze von Dialkylestern der Sulfobernsteinsäure sowie Alkali- und Ammoniumsalze von Alkylsulfaten

(Alkylrest: $C_8$- bis $C_{12}$), von ethoxylierten Alkanolen (EO-Grad: 4 bis 30, Alkylrest: $C_{12}$- bis $C_{18}$), von ethoxylierten Alkylphenolen (EO-Grad: 3 bis 50, Alkylrest: $C_4$- bis $C_9$), von Alkylsulfonsäuren (Alkylrest: $C_{12}$- bis $C_{18}$) und von Alkylarylsulfonsäuren (Alkylrest: $C_9$- bis $C_{18}$).

Weitere geeignete Emulgatoren sind Verbindungen der allgemeinen Formel

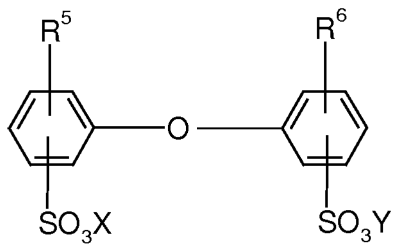

worin R5 und R6 Wasserstoff oder C4- bis C14-Alkyl bedeuten und nicht gleichzeitig Wasserstoff sind, und X und Y Alkalimetallionen und/oder Ammoniumionen sein können. Vorzugsweise bedeuten R5, R6 lineare oder verzweigte Alkylreste mit 6 bis 18 C-Atomen oder Wasserstoff und insbesondere mit 6, 12 und 16 C-Atomen, wobei R5 und R6 nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen in denen X und Y Natrium, R5 ein verzweigter Alkylrest mit 12 C-Atomen und R6 Wasserstoff oder R5 ist. Häufig werden technische Gemische verwendet, die einen Anteil von 50 bis 90 Gew.-% des monoalkylierten Produktes aufweisen. Handelsprodukte geeigneter Emulgatoren sind z.B. Dowfax® 2 A1, Emulan® NP 50, Dextrol®OC 50, Emulgator 825, Emulgator 825 S, Emulan®OG, Texapon® NSO, Nekanil® 904 S, Lumiten® I-RA, Lumiten® E 3065, Disponil® FES 77, Lutensol® AT 18, Steinapol® VSL, Emulphor® NPS 25. Für die vorliegende Erfindung sind ionische Emulgatoren oder Schutzkolloide bevorzugt. Besonders bevorzugt handelt es sich um ionische Emulgatoren, insbesondere Salze und Säuren, wie Carbonsäuren, Sulfonsäuren und Sulfate, Sulfonate oder Carboxylate. Insbesondere können auch Gemische von ionischen und nichtionischen Emulgatoren verwendet werden.

Die Polymerisation kann auch in Gegenwart eines Schutzkolloids erfolgen. Schutzkolloide sind polymere Verbindungen, die bei Solvatation große Mengen Wasser binden und in der Lage sind, Dispersionen von wasserunlöslichen Polymeren zu stabilisieren. Im Gegensatz zu Emulgatoren erniedrigen sie in der Regel die Grenzflächenspannung zwischen Polymerpartikeln und Wasser nicht. Das zahlenmittlere Molekulargewicht von Schutzkolloide liegt z.B. oberhalb von 1000 g/mol.

Monomere a)

Die Monomerenmischung besteht aus mindestens 60 Gew.%, bevorzugt zu mindestens 80 Gew.-%, z.B. von 60 bis 99,8 Gew.% oder von 80 bis 98 Gew.%, besonders bevorzugt zu mindestens 90 Gew.-% bezogen auf die Gesamtmenge an Monomeren, aus mindestens einem Monomeren a) ausgewählt aus der Gruppe bestehend aus C1- bis C20-Alkylacrylaten, C1- bis C20-Alkylmethacrylaten, Vinylestern von bis zu 20 C-Atome enthaltenden Carbonsäuren, Vinylaromaten mit bis zu 20 C-Atomen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen und Mischungen dieser Monomere.

Geeignete Monomere a) sind z.B. (Meth)acrylsäurealkylester mit einem $C_1$-$C_{10}$-Alkylrest, wie Methylmethacrylat, Methylacrylat, n-Butylacrylat, Ethylacrylat und 2-Ethylhexylacrylat sowie Behenyl(meth)acrylat, Isobutylacrylat, tert.-Butyl(meth)acrylat und Cyclohexyl(meth)acrylat. Insbesondere sind auch Mischungen der (Meth)acrylsäurealkylester geeignet. Vinylester von Carbonsäuren mit 1 bis 20 C-Atomen sind z. B. Vinyllaurat, Vinylstearat, Vinylpropionat, Versaticsäurevinylester und Vinylacetat. Als vinylaromatische Verbindungen kommen Vinyltoluol, alpha- und para-Methylstyrol, alpha-Butylstyrol, 4-n-Butylstyrol, 4-n-Decylstyrol und vorzugsweise Styrol in Betracht. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt wird Vinylether von 1 bis 4 C-Atome enthaltenden Alkoholen. Als Kohlenwasserstoffe mit 4 bis 8 C-Atomen und zwei olefinischen Doppelbindungen seien Butadien, Isopren und Chloropren genannt. Als Monomere a) bevorzugt sind die $C_1$- bis $C_{10}$-Alkylacrylate und -methacrylate, insbesondere $C_1$- bis $C_8$-Alkylacrylate und -methacrylate sowie Styrol und deren Mischungen. Ganz besonders bevorzugt sind Methylacrylat, Methylmethacrylat, Ethylacrylat, n-Butylacrylat, n-Butylmethacrylat, n-Hexylacrylat, Octylacrylat, 2-Ethylhexylacrylat, 2-Propylheptylacrylat, Styrol sowie Mischungen dieser Monomere.

Monomere b)

Die Monomerenmischung besteht zu mindestens 0,1 Gew.-%, insbesondere von 0,1 bis 5 Gew.% oder von 0,5 bis 3 Gew.%, bezogen auf die Gesamtmenge an Monomeren, aus mindestens einem ethylenisch ungesättigten Monomeren mit mindestens einer Säuregruppe (Säuremonomer). Die Säuremonomere b) umfassen sowohl Monomere, die wenigstens eine saure Gruppen enthalten, als auch deren Anhydride und deren Salze. Zu den Monomeren b) zählen alpha,beta-monoethylenisch ungesättigte Mono- und Dicarbonsäuren, Halbester von alpha, beta-monoethylenisch ungesättigten Dicarbonsäuren, die Anhydride der vorgenannten alpha, beta-monoethylenisch ungesättigten Carbonsäuren sowie ethylenisch ungesättigte Sulfonsäuren, Phosphonsäuren oder Dihydrogenphosphate und deren wasserlösliche Salze, z.B. deren Alkalimetallsalze. Beispiele hierfür sind Acrylsäure, Methacrylsäure, Itaconsäure, Maleinsäure, Fumarsäure, Crotonsäure, Vinylessigsäure und Vinylmilchsäure. Als ethylenisch ungesättigte Sulfonsäuren eignen sich beispielsweise Vinylsulfonsäure, Styrolsulfonsäure, Acrylamidomethylpropansulfonsäure, Sulfopropylacrylat und Sulfopropylmethacrylat. Bevorzugte Monomere b) sind alpha,beta-monoethylenisch ungesättigte C3-C8-Carbonsäuren und C4-C8-Dicarbonsäuren, z.B. Itaconsäure, Crotonsäure, Vinylessigsäure, Acrylamidoglykolsäure, Acrylsäure und Methacrylsäure, sowie deren Anhydride. Besonders bevorzugte Monomere b) sind Itaconsäure, Acrylsäure und Methacrylsäure und deren Mischungen.

Monomere c)

In der vorliegenden Erfindung enthält die Polymerdispersion Keto-oder Aldehydgruppen. Die Keto- oder Aldehydgruppen können durch Copolymerisation von geeigneten Monomeren c) an das Polymer gebunden werden. Die Monomerenmischung besteht zu mindestens 0,1 Gew.-%, oder zu mindestens 0,2 Gew.%, z.B. zu 0,1 bis 5 Gew. %, oder zu 0,2 bis 5 Gew. %. aus ethylenisch ungesättigten Monomeren mit mindestens einer funktionellen Gruppe, ausgewählt aus Ketogruppen und Aldehydgruppen.

Monomere c) sind z. B. Acrolein, Methacrolein, Vinylalkylketone mit 1 bis 20, vorzugsweise 1 bis 10 C-Atomen im Alkylrest, Formylstyrol, (Meth)acrylsäurealkylester mit ein oder zwei Keto-oder Aldehydgruppen, bzw. einer Aldehyd- und einer Ketogruppe im Alkylrest wobei der Alkylrest vorzugsweise insgesamt 3 bis 10 C-Atome umfasst, z.B. (Meth)acryloxyalkylpropanale, wie sie z.B. in der DE-A 2 722 097 beschrieben sind. Des Weiteren eignen sich auch N-Oxoalkyl-(meth)acrylamide wie sie z. B. aus der DE-A 2 061 213 oder DE-A 2 207 209 bekannt sind, z.B. solche der Formel $R-C(=O)-R'-NH-C(=O)-CR''=CH_2$, wobei R und R" unabhängig voneinander Wasserstoff oder eine Kohlenwasserstoffgruppe (vorzugsweise Alkyl) mit 1 bis 10 C-Atomen bedeuten und R' eine Kohlenwasserstoffgruppe (vorzugweise Alkylen) mit 2 bis 15 C-Atomen bedeutet. Besonders bevorzugt sind Acetoacetyl(meth)acrylat, Acetoacetoxyethyl(meth)acrylat und insbesondere Diacetonacrylamid.

Monomere d)

Die Monomerenmischung kann optional mindestens ein weiteres, von den Monomeren a) bis c) verschiedenes Monomer c) enthalten. Die Monomere d) können z.B. von 0 bis 10 Gew.% oder von 0 bis 5 Gew.-%, insbesondere von 0,1 bis 10 Gew.% oder von 0,1 bis 5 Gew.% oder von 0,2 bis 3 Gew.%, bezogen auf die Gesamtmenge an Monomeren eingesetzt werden.

Monomere d) sind beispielsweise neutrale bzw. nichtionische Monomere mit erhöhter Wasserlöslichkeit, z.B. die Amide oder die N-Alkylolamide der vorgenannten Carbonsäuren, beispielsweise Acrylamid, Methacrylamid, N-Methylolacrylamid und N-Methylolmethacrylamid, oder Phenyloxyethylglykolmono(meth)acrylat. Weitere Monomere d) sind z.B. auch Hydroxylgruppen enthaltende Monomere, insbesondere die Hydroxyalkylester der vorgenannten alpha,beta-monoethylenisch ungesättigten Carbonsäuren, vorzugsweise $C_1$-$C_{10}$-Hydroxyalkyl(meth)acrylate wie z.B. Hydroxyethylacrylat, Hydroxyethylmethacrylat, Hydroxypropylacrylat oder Hydroxypropylmethacrylat sowie 4-Hydroxybutylacrylat. Weitere Monomere d) sind z.B. auch Aminogruppen enthaltende Monomere, insbesondere die Aminoalkylester der vorgenannten alpha,beta-monoethylenisch ungesättigten Carbonsäuren, vorzugsweise $C_1$-$C_{10}$-Aminoalkyl(meth)acrylate wie z.B. 2-Aminoethyl-(meth)acrylat oder tert.-Butylaminoethylmethacrylat. Weiterhin kommen als Monomere d) die Nitrile alpha,beta-monoethylenisch ungesättigter C3-C8-Carbonsäuren, wie z.B. Acrylnitril oder Methacrylnitril in Betracht. Geeignete Monomere d) sind auch bifunktionelle Monomere, die neben einer ethylenisch ungesättigten Doppelbindung wenigstens eine Glycidylgruppe, Oxazolingruppe, Ureidogruppe oder ureido-analoge Gruppe aufweisen. Beispiele für Monomere mit Glycidylgruppe sind ethylenisch ungesättigte Glycidylether und Glycidylester, z.B. Vinyl-, Allyl- und Methallylglycidylether und Glycidyl(meth)acrylat. Beispiele für Monomere d) sind auch vernetzende Monomere, welche mehr als eine radikalisch polymerisierbare Gruppe aufweisen, insbesondere zwei oder mehr (Meth)acrylatgruppen wie z.B. Butandioldi-(meth)acrylat oder Allylmethacrylat. Besonders bevorzugte Monomere d) sind Hydroxyalkyl-(meth)acrylate mit 1 bis 10 C-Atomen in der Alkylgruppe.

Verbindung A

Die erfindungsgemäß einzusetzenden Dispersionen enthalten ferner mindestens eine Verbindung A mit mindestens 2 funktionellen Gruppen, insbesondere 2 bis 5 funktionellen Gruppen, die mit den Keto- oder Aldehydgruppen eine Vernetzungsreaktion eingehen. Verbindungen, die mit den Keto- oder Aldehydgruppen eine Vernetzungsreaktion eingehen können sind z.B. Verbindungen mit Hydrazid-, Hydroxylamin-, Oximether- oder Aminogruppen. Geeignete Verbindungen mit Hydrazidgruppen sind z.B. Polycarbonsäurehydrazide mit einem Molgewicht von vorzugsweise bis zu 500 g/mol. Bevorzugte Hydrazidverbindungen sind Dicarbonsäuredihydrazide mit bevorzugt 2 bis 10 C-Atomen. Genannt seien z.B. Oxalsäuredihydrazid, Malonsäuredihydrazid, Bernsteinsäuredihydrazid, Glutarsäuresäuredihydrazid, Adipinsäuredihydrazid, Sebazinsäuredihydrazid, Maleinsäuredihydrazid, Fumarsäuredihydrazid, Itaconsäuredihydrazid und/oder Isophthalsäuredihydrazid. Besonders bevorzugt sind Adipinsäuredihydrazid, Sebazinsäuredihydrazid und Isophthalsäuredihydrazid. Als Verbindungen mit Aminogruppen geeignet sind beispielsweise Ethylendiamin, Propylendiamin, Tetramethylendiamin, Pentamethylendiamin, Hexamethylendiamin, Diethylentriamin, Triethylentetramin, Polyethylenimine, teilhydrolysierte Polyvinylformamide, Ethylenoxid und Propylenoxid Addukte wie die "Jeffamine", Cyclohexandiamin und Xylylendiamin. Die Verbindung mit den funktionellen Gruppen kann der Zusammensetzung, bzw. der Dispersion des Polymeren zu jedem Zeitpunkt zugesetzt werden. In der wässrigen Dispersion tritt noch keine Vernetzung mit den Keto- oder Aldehydgruppen ein. Erst bei der Trocknung tritt Vernetzung auf dem beschichteten Substrat ein.

Vorzugsweise ist Verbindung A Adipinsäuredihydrazid und Monomer c) Diacetonacrylamid.

Die Menge der Verbindung mit dem funktionellen Gruppen wird vorzugsweise so bemessen, dass das Molverhältnis der mit Keto- bzw. Aldehydgruppen reaktiven funktionellen Gruppen zu den Keto-und/oder Aldehydgruppen des Polymeren 1 : 10 bis 2 : 1, insbesondere 1 : 5 bis 2 : 1, besonders bevorzugt 1 : 2 bis 2 : 1 und ganz besonders bevorzugt 1 : 1,3 bis 1,3 : 1 beträgt. Insbesondere sind äquimolare Mengen der funktionellen Gruppen und der Keto- und/oder Aldehydgruppen bevorzugt.

Vorzugsweise sind die Polymerpartikel der erfindungsgemäß einzusetzenden Polymerdispersion hergestellt aus Monomeren umfassend

a) 90 bis 99,4 Gew.% oder 90 bis 98 Gew.%, bezogen auf die Gesamtmenge an Monomeren, mindestens eines Monomeren ausgewählt aus der Gruppe bestehend aus C1- bis C8-Alkylacrylaten, C1- bis C8-Alkylmethacrylaten und Styrol und Mischungen dieser Monomere und

b) 0,5 bis 3 Gew.%, bezogen auf die Gesamtmenge an Monomeren, mindestens eines Monomeren ausgewählt aus der Gruppe bestehend aus Acrylsäure, Methacrylsäure und Itaconsäure, und

c) 0,1 bis 5 Gew.%, bezogen auf die Gesamtmenge an Monomeren, mindestens einer ethylenisch ungesättigten Verbindung mit mindestens einer Ketogruppe, ausgewählt aus der Gruppe bestehend aus Acetoacetyl(meth)acrylat, Acetoacetoxyethyl(meth)acrylat und Diacetonacrylamid;

d) 0 bis 5 Gew.%, bezogen auf die Gesamtmenge an Monomeren, an weiteren, von den Monomeren a) bis c) verschiedenen Monomeren, ausgewählt aus der Gruppe bestehend aus Acrylamid, Methacrylamid, N-Methylolacrylamid und N-Methylolmethacrylamid, Phenyloxyethylglykolmono(meth)acrylat, Hydroxylgruppen enthaltende Monomere, Aminogruppen enthaltende Monomere, Nitrile alpha,beta-monoethylenisch ungesättigter C3-C8-Carbonsäuren, bifunktionelle Monomere, die neben einer ethylenisch ungesättigten Doppelbindung wenigstens eine Glycidylgruppe, Oxazolingruppe, Ureidogruppe oder ureido-analoge Gruppe aufweisen und vernetzende Monomere, welche mehr als eine radikalisch polymerisierbare Gruppe aufweisen,

und wobei Verbindung A ein Dicarbonsäuredihydrazid mit 2 bis 10 C-Atomen ist.

Vorzugsweise sind die Monomere der Polymerisation so ausgewählt, dass die Glasübergangstemperatur im Bereich von -40 °C bis +15 °C, insbesondere von -35 °C bis +10 °C oder von -10 °C bis +10 °C liegt. Durch gezielte Variation von Art und Menge der Monomeren ist es dem Fachmann erfindungsgemäß möglich, wässrige Polymerzusammensetzungen herzustellen, deren Polymere eine Glasübergangstemperatur im gewünschten Bereich aufweisen. Eine Orientierung ist mittels der Fox-Gleichung möglich. Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für eine Berechnung der Glasübergangstemperatur von Mischpolymerisaten in guter Näherung:

$$1/T_g = x^1/T_g{}^1 + x^2/T_g{}^2 + .... x^n/T_g{}^n,$$

wobei $x^1$, $x^2$, .... $x^n$ die Massenbrüche der Monomeren 1, 2, .... n und $T_g{}^1$, $T_g{}^2$, .... $T_g{}^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J. Wiley, New York 1975, und 3rd Ed. J. Wiley, New York 1989.

In einer Ausführungsform der Erfindung wird bei der Polymerisation mindestens ein Molekulargewichtsregler eingesetzt. Hierdurch kann durch eine Kettenabbruchsreaktion die Molmasse des Emulsionspolymerisats verringert werden. Die Regler werden dabei an das Polymer gebunden, im Allgemeinen an das Kettenende. Die Menge der Regler beträgt insbesondere 0,05 bis 4 Gew.-Teile, besonders bevorzugt 0,05 bis 0,8 Gew.-Teile und ganz besonders bevorzugt 0,1 bis 0,6 Gew.-Teile, bezogen auf 100 Gew.-Teile der zu polymerisierenden Monomeren. Geeignete Regler sind z.B. Verbindungen mit einer Thiolgruppe wie tert.-Butylmercaptan, Thioglycolsäureethylacrylester, Mercaptoethanol, Mercaptopropyltrimethoxysilan oder tert.-Dodecylmercaptan. Bei den Reglern handelt es sich im Allgemeinen um niedermolekulare Verbindungen mit einem Molgewicht kleiner 2000, insbesondere kleiner 1000 g/mol. Bevorzugt sind 2-Ethylhexylthioglycolat (EHTG), Isooctyl-3-mercaptopropionat (IOMPA) und tert.-Dodecylmercaptan (tDMK).

Die Polymerisation erfolgt bevorzugt saatkontrolliert, d.h. in Gegenwart von Polymersaat (Saatlatex). Saatlatex ist eine wässrige Dispersion von feinteiligen Polymerpartikeln mit einem mittleren Teilchendurchmesser von vorzugsweise 20 bis 40 nm. Saatlatex wird eingesetzt in einer Menge von vorzugsweise 0,01 bis 0,5 Gew.-Teilen, besonders bevorzugt von 0,03 bis 0,3 Gew.-Teilen, bezogen auf 100 Gewichtsteile Monomere. Geeignet ist z.B. ein Latex auf Basis von Polystyrol oder auf Basis von Polymethylmethacrylat. Ein bevorzugter Saatlatex ist Polystyrolsaat.

Die Herstellung der erfindungsgemäßen Polymerdispersion erfolgt durch Emulsionspolymerisation. Bei der Emulsionspolymerisation werden ethylenisch ungesättigte Verbindungen (Monomere) in Wasser polymerisiert, wobei üblicherweise ionische und/oder nicht -ionische Emulgatoren und/oder Schutzkolloide bzw. Stabilisatoren als grenzflächenaktive Verbindungen zur Stabilisierung der Monomertröpfchen und der später aus den Monomeren gebildeten Polymerteilchen verwendet werden. Vorzugsweise erfolgt aber die Polymerisation emulgatorarm und ohne Zusatz oder Bildung von Schutzkolloiden. Die Stabilisierung der entstehenden Polymerdispersion kann durch eine spezielle Fahrweise erfolgen. Diese beruht auf einem langsamen anfänglichen Monomerzulauf in Gegenwart von sehr geringer Menge an Polymersaat (Saatkontrolle), gefolgt von der Neutralisation der verwendeten Säuremonomeren im Verlauf oder nach der Polymerisation.

Die Neutralisation von Säuregruppen des Polymerisats erfolgt vorzugsweise durch Zulauf eines Neutralisationsmittels während oder nach der Polymerisation, wobei die Säuregruppen ganz oder teilweise durch Zulauf einer Base neutralisiert werden. Das Neutralisationsmittel kann z.B. in einem separaten Zulauf parallel zum Zulauf der Monomermischung zugegeben werden. Nach Zulauf sämtlicher Monomere ist vorzugsweise die zur Neutralisation von mindestens 10%, vorzugsweise 10 bis 100% oder 25 bis 90% Säureäquivalenten benötigte Menge an Neutralisationsmittel in dem Polymerisationsgefäß enthalten. Das besonders bevorzugte Neutralisationsmittel ist Ammoniak.

Die Emulsionspolymerisation kann mit wasserlöslichen Initiatoren gestartet werden. Wasserlösliche Initiatoren sind z.B. Ammonium- und Alkalimetallsalze der Peroxodischwefelsäure, z.B. Natriumperoxodisulfat, Wasserstoffperoxid oder organische Peroxide, z.B. tert-Butylhydroperoxid. Als Initiator geeignet sind auch so genannte Reduktions-Oxidations(Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z.B. um die bereits vorstehend genannten Initiatoren für die Emulsionspolymerisation. Bei der Reduktionskomponenten handelt es sich z.B. um Alkalimetallsalze der schwefligen Säure, wie z.B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z.B. Ascorbinsäure/Eisen(II)sulfat/Natriumperoxidisulfat, tert-Butylhydroperoxid/ Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Initiatoren werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im Allgemeinen beträgt die Konzentration der Initiatoren 0,1 bis 30 Gew.-%, bevorzugt 0,5 bis 20 Gew.-%, besonders bevorzugt 1,0 bis 10 Gew.-%, bezogen auf die zu polymerisierenden Monomeren. Es können auch mehrere, verschiedene Initiatoren bei der Emulsionspolymerisation Verwendung finden.

Die Emulsionspolymerisation erfolgt vorzugsweise bei 30 bis 130°C, vorzugsweise bei 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann in Form eines Zulaufverfahrens, einschließlich Stufen- oder Gradientenfahrweise, durchgeführt werden. Bei der Polymerisation kann zur besseren Einstellung der Teilchengröße eine Polymersaat vorgelegt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das

Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt. Zur Entfernung der Restmonomeren wird üblicherweise auch nach dem Ende der eigentlichen Emulsionspolymerisation, d.h. nach einem Umsatz der Monomeren von mindestens 95 % Initiator zugesetzt. Die einzelnen Komponenten können dem Reaktor beim Zulaufverfahren von oben, in der Seite oder von unten durch den Reaktorboden zugegeben werden.

Bei der Emulsionspolymerisation werden wässrige Dispersionen des Polymeren in der Regel mit Feststoffgehalten von 15 bis 75 Gew.-%, bevorzugt von 40 bis 60 Gew.-%, besonders bevorzugt größer oder gleich 50 Gew.-% erhalten.

Der pH-Wert der Polymerdispersion wird vorzugsweise auf pH größer 5, insbesondere auf einen pH-Wert zwischen 5,5 und 8 eingestellt.

Die Polymerdispersionen können erfindungsgemäß in wässrigen Klebstoffzubereitungen verwendet werden, z.B. für die Herstellung von Laminaten, d.h. in wässrigen Kaschierklebstoffzubereitungen zum Verkleben von großflächigen Substraten, insbesondere für die Herstellung von Verbundfolien.

Die vorliegende Erfindung betrifft auch ein Verfahren zur Herstellung von Verbundfolien, wobei mindestens zwei Folien unter Verwendung des oben beschriebenen, einkomponentigen Laminierklebstoffs miteinander verklebt werden.

Hierbei können die wässrigen Polymerdispersionen als solche oder nach Konfektionierung mit üblichen Hilfsstoffen eingesetzt werden. Übliche Hilfsstoffe sind beispielsweise Netzmittel, Verdicker, Lichtschutzstabilisatoren, Biozide, Entschäumer usw.

Bei dem Verfahren zur Herstellung von Verbundfolien werden mindestens zwei Folien unter Verwendung der wässrigen Polymerdispersion miteinander verklebt. Dabei wird die erfindungsgemäße Polymerdispersion oder eine entsprechend konfektionierte Zubereitung auf die zu verklebenden, großflächigen Substrate vorzugsweise mit einer Schichtdicke von 0,1 bis 20 $g/m^2$, besonders bevorzugt 1 bis 7 $g/m^2$ z. B. durch Rakeln, Streichen etc. aufgetragen. Es können übliche Beschichtungsverfahren angewendet werden, z.B. Walzenstreichen, Gegenlaufwalzenstreichen, Gravurwalzenstreichen, Gegenlaufgravurwalzenstreichen, Bürstenstreichen, Stabstreichen, Sprühbeschichten, Luftbürstenbeschichtung, Meniskusbeschichtung, Vorhangbeschichtung oder Tauchbeschichtung. Nach kurzer Zeit zur Ablüftung des Dispersionswassers (vorzugsweise nach 1 bis 60 Sekunden) kann das beschichtete Substrat dann mit einem zweiten Substrat kaschiert werden, wobei die Temperatur z.B. 20 bis 200 °C, vorzugsweise 20 bis 100 °C und der Druck z. B. 100 bis 3000 $kN/m^2$, vorzugsweise 300 bis 2000 $kN/m^2$ betragen kann.

Bei der erfindungsgemäßen Verbundfolienkaschierung werden mindestens zwei Folien mit dem Laminierklebstoff vorzugsweise derart miteinander verklebt, dass die Schälfestigkeit (nach 24h, bei 23°C / 50% rel. Luftfeuchte) vorzugsweise 2,5 N / 15 mm oder mehr oder 3 N /15 mm oder mehr beträgt oder dass die miteinander verklebten Folien nur unter Zerstörung mindestens einer der Folien trennbar sind.

Die erfindungsgemäße Polymerdispersion wird als Einkomponentenmittel angewendet, d.h. ohne zusätzliche Vernetzungsmittel, insbesondere ohne Isocyanatvernetzer. Wenigstens eine der Folien kann auf der mit dem Klebstoff beschichteten Seite bedruckt oder metallisiert sein. Als Substrate eignen sich z. B. Polymerfolien, insbesondere aus Polyethylen (PE), orientiertem Polypropylen (OPP), ungerecktes Polypropylen (CPP), Polyamid (PA), Polyethylenterephthalat (PET), Polyacetat, Zellophan, mit Metall, z. B. Aluminium, beschichtete (bedampfte) Polymerfolien (kurz : metallisierte Folien) oder Metallfolien, z. B. aus Aluminium. Die genannten Folien können miteinander oder mit einer Folie eines anderen Typs, z. B. Polymerfolien mit Metallfolien, verschiedene Polymerfolien miteinander etc. verklebt werden. Die genannten Folien können beispielsweise auch mit Druckfarben bedruckt sein.

Die Dicke der Substratfilme kann beispielsweise von 5 bis 100 $\mu$m, vorzugsweise von 5 bis 40 $\mu$m betragen.

Eine Ausführungsform der Erfindung ist eine Verbundfolie, hergestellt unter Verwendung einer der oben beschriebenen erfindungsgemäßen wässrigen Polymerdispersionen, wobei das Material einer ersten Folie ausgewählt ist aus OPP, CPP, PE, PET und PA und wobei das Material einer zweiten Folie ausgewählt ist aus OPP, CPP, PE, PET, PA und Metallfolie. In einer Ausführungsform der Erfindung ist die erste Folie und/oder die zweite Folie auf der jeweiligen Seite, welche mit der erfindungsgemäßen Polymerdispersion beschichtet wird, bedruckt oder metallisiert.

Eine Oberflächenbehandlung der Foliensubstrate ist vor der Beschichtung mit einer erfindungsgemäßen Polymerdispersion nicht unbedingt erforderlich. Bessere Ergebnisse können aber erhalten werden, wenn die Oberfläche der Foliensubstrate vor der Beschichtung modifiziert werden. Hierbei können übliche Oberflächenbehandlungen angewendet werden, z.B. Coronabehandlung zur Verstärkung der Haftwirkung. Die Coronabehandlung oder andere Oberflächenbehandlungen werden in dem Maße durchgeführt, wie für eine ausreichende Benetzbarkeit mit der Beschichtungszusammensetzung erforderlich ist. Üblicherweise ist eine Coronabehandlung von ungefähr 10 Watt pro Quadratmeter und Minute für diesen Zweck ausreichend. Alternativ oder zusätzlich können optional auch noch Primer oder Zwischenschichten zwischen Foliensubstrat und Klebstoffbeschichtung verwendet werden. Außerdem können die Verbundfolien, weitere, zusätzliche funktionale Schichten aufweisen, z.B. Barriereschichten, Druckschichten, Farb- oder

Lackschichten oder Schutzschichten. Die funktionalen Schichten können sich dabei außen, d.h. auf der mit Klebstoff beschichteten Seite abgewandten Seite des Foliensubstrats oder innen, zwischen Foliensubstrat und Klebstoffschicht befinden.

Besondere Vorteile der erfindungsgemäß erhältlichen Folienlaminate sind insbesondere:

- gute Schälfestigkeiten bei der Verbundfolienkaschierung unmittelbar nach dem Kaschieren (Sofortfestigkeit)
- gute Schälfestigkeiten bei der Verbundfolienkaschierung bei erhöhten Temperaturen (Wärmestandfestigkeit)
- gute Schälfestigkeiten bei der Verbundfolienkaschierung unter Einwirkung von migrierfähigen Chemikalien auf den Klebstoff

Beispiele

Abkürzungen

| | |
|---|---|
| IS | Itaconsäure |
| AS | Acrylsäure |
| S | Styrol |
| MA | Methylacrylat |
| nBA | n-Butylacrylat |
| HPA | Hydroxypropylacrylat |
| DAAM | Diacetonacrylamid |
| ADDH | Adipinsäuredihydrazid |
| Basonat® LR 9056 | wasserdispergierbares Polyisocyanat basierend auf isocyanuratiertem Hexamethylendiisocyanat |
| EHTG | 2-Ethylhexylthioglycolat (Polymerisationsregler) |
| pphm | parts per hundred parts monomers (Gewichtsteile auf 100 Gewichtsteile Monomere) |
| FG | Feststoffgehalt |
| LD | Lichtdurchlässigkeit; Messgröße, um Teilchengrößenunterschiede zu bestimmen. Hierbei wird die Polymerdispersion auf 0,01% Feststoffgehalt verdünnt und die Lichtdurchlässigkeit im Vergleich zu reinem Wasser gemessen. |
| Tg (ber.) | Glasübergangstemperatur, berechnet nach der Fox- Gleichung aus der Glasübergangstemperatur, der Homopolymerisate der im Copolymerisat vorhandenen Monomeren und deren Gewichtsanteil: |

$$1/Tg = xA/TgA + xB/TgB + xC/TgC + \ldots\ldots$$

Tg: berechnete Glasübergangstemperatur des Copolymeren
TgA: Glasübergangstemperatur des Homopolymeren von Monomer A
TgB, TgC: Tg entsprechend für Monomere B, C, etc.
xA: Masse Monomer A/Gesamtmasse Copolymer,
xB, xC entsprechend für Monomere B, C etc.

Beispiele 1 und 2

| Monomere | Beispiel 1 (Gew.-Teile) | Beispiel 2 (Gew.-Teile) |
|---|---|---|
| MA | 65,1 | 63,1 |
| nBA | 29,8 | 29,8 |
| HPA | 2 | 2 |
| IS | 1 | 1 |
| AS | 0,1 | 0,1 |

(fortgesetzt)

| Monomere | Beispiel 1 (Gew.-Teile) | Beispiel 2 (Gew.-Teile) |
|---|---|---|
| DAAM | 2 | 4 |

Die aufgelisteten Monomere werden in Gegenwart von 0,1 pphm Polystyrolsaat und 0,1 pphm Emulgator (Disponil® FES 27) in Wasser bei einer Temperatur von 85 °C polymerisiert. Als Initiator wird Natriumperoxodisulfat verwendet. Zur weiteren Stabilisierung der Polymerpartikel wird im Verlauf der Polymerisation insgesamt 0,35 pphm Base (Ammoniak) zugesetzt. Zur Reduktion von Monomeren in der Polymerdispersion wird nach der Polymerisation eine chemische Desodorierung mittels Rongalit C und tert-Butylhydroperoxid eingesetzt. Nach dem Abkühlen auf Raumtemperatur wird die Polymerdispersion mit ADDH versetzt.

Beispiel 3 (Vergleichsbeispiel)

| | Beispiel 3 (Gew.-Teile) |
|---|---|
| MA | 67,1 |
| nBA | 29,8 |
| HPA | 2 |
| IS | 1 |
| AS | 0,1 |
| DAAM | -- |

Die aufgelisteten Monomere werden in Gegenwart von 0,3 pphm Polystyrolsaat und 0,25 pphm Emulgator (Disponil® FES 27) in Wasser bei einer Temperatur von 80 °C polymerisiert. Als Initiator wird Natriumperoxodisulfat verwendet. Zur weiteren Stabilisierung der Polymerpartikel wird im Verlauf der Polymerisation insgesamt 0,3 pphm Base (Ammoniak) zugesetzt. Zur Reduktion von Monomeren in der Polymerdispersion wird nach der Polymerisation eine chemische Desodorierung mittels Acetonbisulfit und tert-Butylhydroperoxid eingesetzt.

Beispiele 4 und 5

| | Beispiel 4 (Gew.-Teile) | Beispiel 5 (Gew.-Teile) |
|---|---|---|
| n-BA | 62 | 72,3 |
| S | 35,5 | 23,7 |
| AS | 1,5 | 2 |
| DAAM | 1 | 2 |
| EHTG | 1 | 0,1 |

Die aufgelisteten Monomere werden in Gegenwart von 0,1 (Beispiel 4) bzw. 0,3 (Beispiel 5) pphm Polystyrolsaat und 0,1 (Beispiel 4) bzw. 0,5 (Beispiel 5) pphm Emulgator in Wasser bei einer Temperatur von 85 °C polymerisiert. Als Initiator wird Natriumperoxodisulfat verwendet. Zur weiteren Stabilisierung der Polymerpartikel wird im Verlauf der Polymerisation insgesamt 0,35 pphm Base (Ammoniak) zugesetzt. Zur Reduktion von Monomeren in der Polymerdispersion wird nach der Polymerisation eine chemische Desodorierung mittels Acetonbisulfit und tert-Butylhydroperoxid eingesetzt. Nach dem Abkühlen auf Raumtemperatur wird die Polymerdispersion mit ADDH versetzt.

Beispiel 6 (Vergleichsbeispiel)

| | Beispiel 6 (Gew.-Teile) |
|---|---|
| n-BA | 63 |
| S | 35,5 |
| AS | 1,5 |
| EHTG | 1 |
| DAAM | -- |

Die aufgelisteten Monomere werden in Gegenwart von 0,1 pphm Polystyrolsaat und 0,1 pphm Emulgator (Disponil® LDBS 20) in Wasser bei einer Temperatur von 85 °C polymerisiert. Als Initiator wird Natriumperoxodisulfat verwendet. Zur weiteren Stabilisierung der Polymerpartikel wird im Verlauf der Polymerisation insgesamt 0,35 pphm Base (Ammoniak) zugesetzt. Zur Reduktion von Monomeren in der Polymerdispersion wird nach der Polymerisation eine chemische Desodorierung mittels Acetonbisulfit und tert-Butylhydroperoxid eingesetzt.

Beispiel 7 (Vergleich)

Acronal® A 245 wässrige Haftklebstoffdispersion eines Acrylatcopolymers

Tabelle 1: Nassmusterwerte der Beispiele 1-7

| Beispiel | Polymerzusammensetzung [Gew.-Teile] | Emulgator | Tg (ber.) [°C] | FG [%] | LD [%] | pH |
|---|---|---|---|---|---|---|
| Beispiel 1 | 65 MA, 30 nBA, 2 HPA, 1 IS, 2 DAAM; 1,6 ADDH | 0,1% Disponil® LDBS 20 | -9 | 45,2 | 56 | 7,9 |
| Beispiel 2 | 63 MA, 30 nBA, 2 HPA, 1 IS, 4 DAAM; 3,2 ADDH | 0,1% Disponil® LDBS 20 | -8 | 45,2 | 57 | 7,3 |
| Beispiel 3 Vergleich | 63 MA, 34 nBA, 2 HPA, 1 IS, | 0,25% Disponil® FES 27 | -14 | 51,5 | 71 | 6,8 |
| Beispiel 4 | 62 nBA, 35,5 S, 1,5 AS, 1 DAAM; 0,5 ADDH; 1 EHTG | 0,1% Disponil® LDBS 20 | -5 | 45 | 34 | 6,9 |
| Beispiel 5 | 72 nBA, 24 S, 2 AS, 2 DAAM; 1 ADDH; 0,1 EHTG | 0,5% Disponil® LDBS 20 | -16 | 46 | 50 | 6,0 |
| Beispiel 5a | 72 nBA, 24 S, 2 AS, 2 DAAM; 1 ADDH; 0,1 EHTG | 2% Disponil® LDBS 20 | -16 | 47 | 50 | 6,0 |
| Beispiel 6 Vergleich | 63 nBA, 35,5 S, 1,5 AS; 1 EHTG | 0,1% Disponil® LDBS 20 | -6 | 45,5 | 34 | 7,6 |
| Beispiel 7 | 63 nBA, 27 2-EHA, 5 MA, 3 S, 1 AS, 0,7 DAAM; 0,3 ADDH | 1,4% Lumiten® I-SC / 1% Disponil® FES77 | -45 | 52 | 75 | 7,5 |

Anwendungstechnische Prüfungen

Substrate, Kaschierfolien:

Polyesterfolie, 12 µm dick, Korona vorbehandelt, Oberflächenspannung > 38 mN/m;
PE-Folie 60 µm dick, Korona vorbehandelt, Oberflächenspannung > 38 mN/m

Klebstoffauftrag:

Direkt auf die Korona vorbehandelte Seite der Basisfolie mit einem Auftragsgewicht von 2,5-3,0 g/$m^2$ trocken.

Loop Tack:

Der Klebstoff wird in einer Auftragsstärke von 20 μm (trocken) auf eine 12 μm starken Polyesterfolie aufgetragen und 3 min bei 90°C getrocknet. Aus der beschichteten Polyesterfolie wird ein 25 mm breiter und 200 mm langer Streifen geschnitten und dieser zu einer Schlaufe geformt. Diese wird mit dem Klebstoff nach außen an den beiden Enden in die Backen einer Zugprüfmaschine eingespannt. Die Schlaufe wird in einer Geschwindigkeit von 300 mm/min so auf eine polierte Edelstahloberfläche gefahren, dass sich eine Kontaktfläche von 40 x 25 mm ergibt.

Dann wird die Schlaufe in einer Geschwindigkeit von 300 mm/min von der Stahloberfläche abgezogen und dabei der Loop Tack als Maximalkraft in N/25 mm ermittelt (bei Raumtemperatur; 20°C).

Dynamische Schälfestigkeit bei 23°C:

Die Basisfolie wird auf dem Laborbeschichtungstisch mit der vorbehandelten Seite nach oben fixiert und der zu prüfende Kleber mittels Rakel direkt auf die Folie beschichtet. Der Kleber wird für 2 Minuten mit einem Warmluftgebläse getrocknet und dann die Kaschierfolie mit einer Handrolle aufgelegt und in der Rollenkaschierstation bei 70° C, mit einer Walzengeschwindigkeit von 5 m/Minute und einem Kaschierdruck von 6,5 bar gepresst. Danach wird das Laminat mittels einer Schneideschablone in 15 Millimeter breite Streifen geschnitten und diversen Lagerungszyklen unterworfen. Nach der Lagerung wird der Laminatstreifen an der Zugprüfmaschine auseinander gezogen und die dazu benötigte Kraft festgehalten. Die Prüfung erfolgt an einer Zugprüfmaschine im Winkel von 90 Grad mit einer Abzugsgeschwindigkeit von 100 mm/min. Der Prüfstreifen wird an einer Seite aufgetrennt, eines der nun losen Enden in die obere Klemme, das andere in die untere Klemmbacke der Zugprüfmaschine eingespannt und die Prüfung gestartet. Angegeben wird der Mittelwert der Kraft aus 3 Einzelmessungen in N/15 mm.

Die Muster können nach verschiedenen Lagerbedingungen geprüft werden:

1. sofort nach dem Kaschieren (< 3min)

2. nach 24h (bei 23°C / 50% rel. Luftfeuchte)

3. nach 24h (bei 23°C / 50% rel. Luftfeuchte) + 7d bei 50°C in Ketschup

Dynamische Schälfestigkeit bei 90°C:

Die Basisfolie wird auf dem Laborbeschichtungstisch mit der vorbehandelten Seite nach oben fixiert und der zu prüfende Kleber mittels Rakel direkt auf die Folie beschichtet. Der Kleber wird für 2 Minuten mit einem Warmluftgebläse getrocknet und dann die Kaschierfolie mit einer Handrolle aufgelegt und in der Rollenkaschierstation bei 70° C, mit einer Walzengeschwindigkeit von 5 m/Minute und einem Kaschierdruck von 6,5 bar gepresst. Danach wird das Laminat mittels der Schneideschablone in 15 Millimeter breite Streifen geschnitten und min. 24h bei 23°C / 50% relative Luftfeuchte gelagert. Nach der Lagerung wird der Laminatstreifen an der Zugprüfmaschine mit Klimakammer bei einer Temperatur von 90°C auseinander gezogen und die dazu benötigte Kraft festgehalten. Die Prüfung erfolgt an einer Zugprüfmaschine mit Klimakammer mit einer Abzugsgeschwindigkeit von 100 mm/min. Der Prüfstreifen wird an einer Seite aufgetrennt, eines der nun losen Enden in die obere Klemme, das andere in die untere Klemmbacke der Zugprüfmaschine eingespannt und die Prüfung gestartet. Die Messung startet nach 1 min Wartezeit, um den Prüfstreifen zu konditionieren. Auswertung: Angegeben wird der Mittelwert der Kraft aus 3 Einzelmessungen in N/15 Millimeter.

Beurteilung des Bruchbildes:

A = Klebeschicht bleibt vollständig auf der Basisfolie (Adhäsionsbruch)
K = Trennung in der Klebeschicht ohne Ablösung von einem Werkstoff (Kohäsionsbruch)
MB = Teilweiser oder völliger Bruch einer Folie

Tabelle 2.: Klebewerte der Klebstoffdispersionen

| Bsp. | Zugabe von 6% fest auf fest Basonat® LR 9056 | Schälfestigkeit nach < 3 min bei 23°C [N/15 mm]/ Bruchbild | Schälfestigkeit nach 24 h bei 23°C [N/15 mm]/ Bruchbild | Schälfestigkeit nach 24 h bei 23°C + 7 d bei 50°C in Ketchup [N/15 mm] / Bruchbild | Schälfestigkeit bei 90°C [N/15 mm] / Bruchbild |
|---|---|---|---|---|---|
| 1 | nein | 2,2 A | 4,0 MB | 1,4 A | 1,4 A |
| 2 | nein | 1,8 A | 3,5 MB | 1,8 A | 1,1 A |
| 3 | nein | 0,5 A | 0,7 A | 0,1 K | 0,4 K |
| 3 | ja | 1,9 A | 3,2 MB | 1,9 A | 0,6 K |
| 4 | nein | 2,6 A | 4,4 MB | 1,6 A | 0,7 K |
| 5 | nein | 2,8 A | 4,2 MB | 3,4 A | 0,5 K |
| 5a | nein | 1,3 | 4,0 MB | 3.2 A | 0,5 K |
| 6 | nein | 1,0 A | 1,2 A | 0,1 K | 0,1 K |
| 6 | ja | 2,5 A | 4,1 MB | 1,7 A | 0,7 K |
| 7 | nein | 1,1 A | 2,3 K | 1,1 K | 0,4 K |

Diese Tabelle zeigt, dass die erfindungsgemäßen Beispiele sich gut als einkomponentiger Klebstoff in der Verbundfolienkaschierung verwenden lassen, insbesondere wenn eine hohe Beständigkeit gegen Wärme und gegen migrierfähige Chemikalien gefordert wird.

Die bevorzugte Emulgatormenge von < 1 pphm bewirkt eine besonders hohe Sofortfestigkeit der mit den erfindungsgemäßen Dispersionen hergestellten Laminate (Beispiel 5 vs. Beispiel 5a).

## Patentansprüche

**1.** Verwendung eines einkomponentigen Laminierklebstoffs zur Verbundfolienkaschierung, wobei der Laminierklebstoff in Form einer wässrigen Polymerdispersion vorliegt und die wässrige Polymerdispersion in Wasser dispergierte Polymerpartikel enthält, herstellbar durch radikalische Emulsionspolymerisation von Monomeren umfassend

a) mindestens 60 Gew.%, bezogen auf die Gesamtmenge an Monomeren, mindestens eines Monomeren ausgewählt aus der Gruppe bestehend aus C1- bis C20-Alkylacrylaten, C1- bis C20-Alkylmethacrylaten, Vinylestern von bis zu 20 C-Atome enthaltenden Carbonsäuren, Vinylaromaten mit bis zu 20 C-Atomen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen und Mischungen dieser Monomere und
b) mindestens 0,1 Gew.%, bezogen auf die Gesamtmenge an Monomeren, mindestens eines Monomeren mit mindestens einer Säuregruppe, und
c) 0,1 bis 5 Gew.%, bevorzugt 0,5 bis 5 Gew.%, bezogen auf die Gesamtmenge an Monomeren, mindestens einer ethylenisch ungesättigten Verbindung mit mindestens einer funktionellen Gruppe, ausgewählt aus Ketogruppen und Aldehydgruppen;

wobei bei der Emulsionspolymerisation weniger als 1 Gewichtsteil Emulgator auf 100 Gewichtsteile Monomere eingesetzt wird;
wobei die wässerige Polymerdispersion mindestens eine Verbindung A enthält, welche mindestens zwei funktionelle Gruppen aufweist, die mit den Ketogruppen oder mit den Aldehydgruppen eine Vernetzungsreaktion eingehen können;
wobei das Molverhältnis der mit Ketogruppen oder mit Aldehydgruppen reaktiven Gruppen der Verbindung A zu den Keto- und Aldehydgruppen des Monomers c) von 1:10 bis 2:1 beträgt;
wobei bei der Verbundfolienkaschierung mindestens zwei Folien mit dem Laminierklebstoff derart fest miteinander verklebt sind, dass die Schälfestigkeit, gemessen 24 h nach der Laminatherstellung und bei 23°C 2,5 N / 15 mm oder mehr beträgt oder dass die miteinander verklebten Folien nur unter Zerstörung mindestens einer der Folien trennbar sind.

2. Verwendung gemäß Anspruch 1, **dadurch gekennzeichnet, dass** der Laminierklebstoff eine Klebrigkeit von weniger als 1,7 N / 25 mm aufweist, gemessen als Loop Tack in einer Auftragsstärke von 20 μm, aufgetragen auf einer 12 μm starken Polyesterfolie, gemessen auf Stahl bei Raumtemperatur (20 °C) mit einer Abzugsgeschwindigkeit von 300 mm/min.

3. Verwendung gemäß einem der Ansprüche 1 bis 2, **dadurch gekennzeichnet, dass** die Polymerpartikel hergestellt sind aus Monomeren umfassend

   a) 60 bis 99,8 Gew.%, bezogen auf die Gesamtmenge an Monomeren, mindestens eines Monomeren ausgewählt aus der Gruppe bestehend aus C1- bis C20-Alkylacrylaten, C1-bis C20-Alkylmethacrylaten, Vinylestern von bis zu 20 C-Atome enthaltenden Carbonsäuren, Vinylaromaten mit bis zu 20 C-Atomen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen und Mischungen dieser Monomere und
   b) 0,1 bis 5 Gew.%, bezogen auf die Gesamtmenge an Monomeren, mindestens eines Monomeren mit mindestens einer Säuregruppe, und
   c) 0,1 bis 5 Gew.%, bezogen auf die Gesamtmenge an Monomeren, mindestens einer ethylenisch ungesättigten Verbindung mit mindestens einer funktionellen Gruppe, ausgewählt aus Ketogruppen und Aldehydgruppen;
   d) 0 bis 10 Gew.%, bezogen auf die Gesamtmenge an Monomeren, an weiteren, von den Monomeren a) bis c) verschiedenen Monomeren.

4. Verwendung gemäß einem der Ansprüche 1 bis 3, **dadurch gekennzeichnet, dass** die Monomeren d) ausgewählt sind aus der Gruppe bestehend aus Acrylamid, Methacrylamid, N-Methylolacrylamid, N-Methylolmethacrylamid, Phenyloxyethylglykolmono(meth)acrylat, Hydroxylgruppen enthaltende Monomere, Aminogruppen enthaltende Monomere, Nitrile alpha,beta-monoethylenisch ungesättigter C3-C8-Carbonsäuren, bifunktionelle Monomere, die neben einer ethylenisch ungesättigten Doppelbindung wenigstens eine Glycidylgruppe, Oxazolingruppe, Ureidogruppe oder ureido-analoge Gruppe aufweisen und vernetzende Monomere, welche mehr als eine radikalisch polymerisierbare Gruppe aufweisen.

5. Verwendung gemäß einem der Ansprüche 1 bis 4, **dadurch gekennzeichnet, dass** die Monomere a) ausgewählt sind aus C1- bis C8-Alkylacrylaten, C1- bis C8-Alkylmethacrylaten und Styrol, dass die Monomeren b) ausgewählt sind aus Acrylsäure, Methacrylsäure und Itaconsäure und dass die Monomere d) ausgewählt sind aus Hydroxyalkyl(meth)acrylaten mit 1 bis 10 C-Atomen in der Alkylgruppe.

6. Verwendung gemäß einem der Ansprüche 1 bis 5, **dadurch gekennzeichnet, dass** die Monomere c) ausgewählt sind aus der Gruppe bestehend aus Acrolein, Methacrolein, Vinylalkylketonen mit 1 bis 20 C-Atomen im Alkylrest, Formylstyrol, (Meth)acrylsäurealkylester mit ein oder zwei Keto- oder Aldehydgruppen oder mit einer Aldehyd- und einer Ketogruppe im Alkylrest, N-Oxoalkyl(meth)acrylamide, Acetoacetyl(meth)acrylat, Acetoacetoxyethyl(meth)-acrylat und Diacetonacrylamid.

7. Verwendung gemäß einem der Ansprüche 1 bis 6, **dadurch gekennzeichnet, dass** die Verbindung A ausgewählt ist aus der Gruppe bestehend aus Verbindungen mit Hydrazid-, Hydroxylamin-, Oximether- oder Aminogruppen.

8. Verwendung gemäß einem der Ansprüche 1 bis 7, **dadurch gekennzeichnet, dass** Verbindung A ein Dicarbonsäuredihydrazid mit 2 bis 10 C-Atomen ist, und dass Monomer c) ausgewählt ist aus Acetoacetyl(meth)acrylat, Acetoacetoxyethyl(meth)acrylat und Diacetonacrylamid.

9. Verwendung gemäß einem der Ansprüche 1 bis 8, **dadurch gekennzeichnet, dass** Verbindung A Adipinsäuredihydrazid ist und dass Monomer c) Diacetonacrylamid ist.

10. Verwendung gemäß einem der Ansprüche 1 bis 9, **dadurch gekennzeichnet, dass** die Polymerpartikel hergestellt sind aus Monomeren umfassend

   a) 90 bis 99,4 Gew.%, bezogen auf die Gesamtmenge an Monomeren, mindestens eines Monomeren ausgewählt aus der Gruppe bestehend aus C1- bis C8-Alkylacrylaten, C1-bis C8-Alkylmethacrylaten und Styrol und Mischungen dieser Monomere und
   b) 0,5 bis 3 Gew.%, bezogen auf die Gesamtmenge an Monomeren, mindestens eines Monomeren ausgewählt aus der Gruppe bestehend aus Acrylsäure, Methacrylsäure und Itaconsäure, und
   c) 0,1 bis 5 Gew.%, bezogen auf die Gesamtmenge an Monomeren, mindestens einer ethylenisch ungesättigten

Verbindung mit mindestens einer Ketogruppe, ausgewählt aus der Gruppe bestehend aus Acetoacetyl(meth)acrylat, Acetoacetoxyethyl(meth)acrylat und Diacetonacrylamid;
d) 0 bis 5 Gew.%, bezogen auf die Gesamtmenge an Monomeren, an weiteren, von den Monomeren a) bis c) verschiedenen Monomeren, ausgewählt aus der Gruppe bestehend aus Acrylamid, Methacrylamid, N-Methylolacrylamid und N-Methylolmethacrylamid, Phenyloxyethylglykolmono(meth)acrylat, Hydroxylgruppen enthaltende Monomere, Aminogruppen enthaltende Monomere, Nitrile alpha,beta-monoethylenisch ungesättigter C3-C8-Carbonsäuren, bifunktionelle Monomere, die neben einer ethylenisch ungesättigten Doppelbindung wenigstens eine Glycidylgruppe, Oxazolingruppe, Ureidogruppe oder ureido-analoge Gruppe aufweisen und vernetzende Monomere, welche mehr als eine radikalisch polymerisierbare Gruppe aufweisen,

und wobei Verbindung A ein Dicarbonsäuredihydrazid mit 2 bis 10 C-Atomen ist.

11. Verwendung gemäß einem der Ansprüche 1 bis 10, **dadurch gekennzeichnet, dass** das Molverhältnis der mit Ketogruppen oder mit Aldehydgruppen reaktiven Gruppen der Verbindung A zu den Keto- und Aldehydgruppen des Monomers c) von 1:1,3 bis 1,3:1 beträgt.

12. Verwendung gemäß einem der Ansprüche 1 bis 11, **dadurch gekennzeichnet, dass** das Material der zu verklebenden Folien ausgewählt ist aus der Gruppe bestehend aus Polyethylen, orientiertem Polypropylen, ungerecktem Polypropylen, Polyamid, Polyethylenterephthalat, Polyacetat, Zellophan, metallisierten Folien und Metallfolien.

13. Verwendung gemäß einem der Ansprüche 1 bis 12, **dadurch gekennzeichnet, dass** das Polymer eine Glasübergangstemperatur von -40 bis +15 °C vorzugsweise von -10 bis +10 °C aufweist, gemessen durch Differential Scanning Calorimetrie als midpoint temperature gemäß ASTM D 3418-08 mit einer Heizrate von 20 °C/min bei Auswertung der zweiten Heizkurve.

14. Verfahren zur Herstellung von Verbundfolien wobei mindestens zwei Folien unter Verwendung des einkomponentigen, nicht selbstklebenden Laminierklebstoffs gemäß einem der Ansprüche 1 bis 13 miteinander verklebt werden.

15. Verwendung der gemäß den vorhergehenden Ansprüchen 1 bis 14 erhältlichen Verbundfolien für die Verpackung von Lebensmitteln.

16. Verbundfolie, welche eine erste und mindestens eine zweite Folie aufweist, welche miteinander verklebt sind unter Verwendung des Laminierklebstoffs gemäß einem der Ansprüche 1 bis 13.

## Claims

1. The use of a one-component laminating adhesive for composite film lamination, the laminating adhesive being present in the form of an aqueous polymer dispersion, and the aqueous polymer dispersion comprising polymer particles in dispersion in water that are preparable by radical emulsion polymerization of monomers comprising

a) at least 60 wt%, based on the total amount of monomers, of at least one monomer selected from the group consisting of C1 to C20 alkyl acrylates, C1 to C20 alkyl methacrylates, vinyl esters of carboxylic acids comprising up to 20 carbon atoms, vinylaromatics having up to 20 carbon atoms, vinyl halides, vinyl ethers of alcohols comprising 1 to 10 carbon atoms, aliphatic hydrocarbons having 2 to 8 carbon atoms and one or two double bonds, and mixtures of these monomers, and
b) at least 0.1 wt%, based on the total amount of monomers, of at least one monomer having at least one acid group, and
c) 0.1 to 5 wt%, preferably 0.5 to 5 wt%, based on the total amount of monomers, of at least one ethylenically unsaturated compound having at least one functional group selected from keto groups and aldehyde groups;

where less than 1 part by weight of emulsifier is used per 100 parts by weight of monomers in the emulsion polymerization;
where the aqueous polymer dispersion comprises at least one compound A which has at least two functional groups that are able to enter into a crosslinking reaction with the keto groups or with the aldehyde groups;
where the molar ratio of the groups of the compound A that are reactive with keto groups or with aldehyde groups to the keto and aldehyde groups of the monomer c) is from 1:10 to 2:1;
where, in the composite film lamination, at least two films are bonded to one another with the laminating adhesive

so firmly that the peel strength, measured 24 h after laminate production and at 23°C, is 2.5 N/15 mm or more or that the films bonded to one another are partable only with destruction of at least one of the films.

**2.** The use according to claim 1, wherein the laminating adhesive has a tack of less than 1.7 N/25 mm, measured as loop tack in an applied thickness of 20 μm, applied to a polyester film 12 μm thick, and measured on steel at room temperature (20°C) with a removal velocity of 300 mm/min.

**3.** The use according to either of claims 1 and 2, wherein the polymer particles are produced from monomers comprising

a) 60 to 99.8 wt%, based on the total amount of monomers, of at least one monomer selected from the group consisting of C1 to C20 alkyl acrylates, C1 to C20 alkyl methacrylates, vinyl esters of carboxylic acids comprising up to 20 carbon atoms, vinylaromatics having up to 20 carbon atoms, vinyl halides, vinyl ethers of alcohols comprising 1 to 10 carbon atoms, aliphatic hydrocarbons having 2 to 8 carbon atoms and one or two double bonds, and mixtures of these monomers, and
b) 0.1 to 5 wt%, based on the total amount of monomers, of at least one monomer having at least one acid group, and
c) 0.1 to 5 wt%, based on the total amount of monomers, of at least one ethylenically unsaturated compound having at least one functional group selected from keto groups and aldehyde groups;
d) 0 to 10 wt%, based on the total amount of monomers, of other monomers, different from the monomers a) to c).

**4.** The use according to any of claims 1 to 3, wherein the monomers d) are selected from the group consisting of acrylamide, methacrylamide, N-methylolacrylamide, N-methylolmethacrylamide, phenyloxyethyl glycol mono(meth)acrylate, monomers comprising hydroxyl groups, monomers comprising amino groups, nitriles of alpha,beta-monoethylenically unsaturated C3-C8 carboxylic acids, bifunctional monomers which as well as an ethylenically unsaturated double bond have at least one glycidyl group, oxazoline group, ureido group or ureido-analogous group, and crosslinking monomers which have more than one radically polymerizable group.

**5.** The use according to any of claims 1 to 4, wherein the monomers a) are selected from C1 to C8 alkyl acrylates, C1 to C8 alkyl methacrylates, and styrene, the monomers b) are selected from acrylic acid, methacrylic acid, and itaconic acid, and the monomers d) are selected from hydroxyalkyl (meth)acrylates having 1 to 10 carbon atoms in the alkyl group.

**6.** The use according to any of claims 1 to 5, wherein the monomers c) are selected from the group consisting of acrolein, methacrolein, vinyl alkyl ketones having 1 to 20 carbon atoms in the alkyl radical, formylstyrene, alkyl (meth)acrylates having one or two keto or aldehyde groups or having one aldehyde and one keto group in the alkyl radical, N-oxoalkyl(meth)acrylamides, acetoacetyl (meth)acrylate, acetoacetoxyethyl (meth)acrylate, and diacetoneacrylamide.

**7.** The use according to any of claims 1 to 6, wherein the compound A is selected from the group consisting of compounds having hydrazide, hydroxylamine, oxime ether, or amino groups.

**8.** The use according to any of claims 1 to 7, wherein compound A is a dicarboxylic dihydrazide having 2 to 10 carbon atoms, and monomer c) is selected from acetoacetyl (meth)acrylate, acetoacetoxyethyl (meth)acrylate, and diacetoneacrylamide.

**9.** The use according to any of claims 1 to 8, wherein compound A is adipic dihydrazide and monomer c) is diacetoneacrylamide.

**10.** The use according to any of claims 1 to 9, wherein the polymer particles are produced from monomers comprising

a) 90 to 99.4 wt%, based on the total amount of monomers, of at least one monomer selected from the group consisting of C1 to C8 alkyl acrylates, C1 to C8 alkyl methacrylates, and styrene, and mixtures of these monomers, and
b) 0.5 to 3 wt%, based on the total amount of monomers, of at least one monomer selected from the group consisting of acrylic acid, methacrylic acid, and itaconic acid, and
c) 0.1 to 5 wt%, based on the total amount of monomers, of at least one ethylenically unsaturated compound having at least one keto group, selected from the group consisting of acetoacetyl (meth)acrylate, acetoacetoxyethyl (meth)acrylate, and diacetoneacrylamide;

d) 0 to 5 wt%, based on the total amount of monomers, of other monomers, different from the monomers a) to c), selected from the group consisting of acrylamide, methacrylamide, N-methylolacrylamide and N-methylolmethacrylamide, phenyloxyethyl glycol mono(meth)acrylate, monomers comprising hydroxyl groups, monomers comprising amino groups, nitriles of alpha,beta-monoethylenically unsaturated C3-C8 carboxylic acids, bifunctional monomers which as well as an ethylenically unsaturated double bond have at least one glycidyl group, oxazoline group, ureido group or ureido-analogous group, and crosslinking monomers which have more than one radically polymerizable group,

and where compound A is a dicarboxylic dihydrazide having 2 to 10 carbon atoms.

**11.** The use according to any of claims 1 to 10, wherein the molar ratio of the groups of the compound A that are reactive with keto groups or with aldehyde groups to the keto and aldehyde groups of the monomer c) is from 1:1.3 to 1.3:1.

**12.** The use according to any of claims 1 to 11, wherein the material of the films to be bonded is selected from the group consisting of polyethylene, oriented polypropylene, undrawn polypropylene, polyamide, polyethylene terephthalate, polyacetate, cellophane, metalized films, and metal foils.

**13.** The use according to any of claims 1 to 12, wherein the polymer has a glass transition temperature of - 40 to +15°C, preferably of -10 to +10°C, measured by Differential Scanning Calorimetry as midpoint temperature to ASTM D 3418-08 at a heating rate of 20°C/min with evaluation of the second heating curve.

**14.** A method for producing composite films by bonding to one another at least two films using the one-component, non-self-adhesive laminating adhesive according to any of claims 1 to 13.

**15.** The use of the composite films obtainable according to preceding claims 1 to 14 for the packaging of foods.

**16.** A composite film having a first film and at least one second film which are bonded to one another using the laminating adhesive according to any of claims 1 to 13.

## Revendications

**1.** Utilisation d'un adhésif de stratification monocomposant pour le contre-collage de films composites, l'adhésif de stratification se présentant sous la forme d'une dispersion aqueuse de polymère et la dispersion aqueuse de polymère contenant des particules polymères dispersées dans de l'eau, pouvant être fabriquées par polymérisation en émulsion radicalaire de monomères comprenant :

a) au moins 60 % en poids, par rapport à la quantité totale de monomères, d'au moins un monomère choisi dans le groupe constitué par les acrylates d'alkyle en C1 à C20, les méthacrylates d'alkyle en C1 à C20, les esters de vinyle d'acides carboxyliques contenant jusqu'à 20 atomes C, les composés aromatiques de vinyle contenant jusqu'à 20 atomes C, les halogénures de vinyle, les éthers de vinyle d'alcools contenant 1 à 10 atomes C, les hydrocarbures aliphatiques contenant 2 à 8 atomes C et une ou deux doubles liaisons et les mélanges de ces monomères, et
b) au moins 0,1 % en poids, par rapport à la quantité totale de monomères, d'au moins un monomère contenant au moins un groupe acide, et
c) 0,1 à 5 % en poids, de préférence 0,5 à 5 % en poids, par rapport à la quantité totale de monomères, d'au moins un composé éthyléniquement insaturé contenant au moins un groupe fonctionnel, choisi parmi les groupes céto et les groupes aldéhyde ;

moins de 1 partie en poids d'émulsifiant pour 100 parties en poids de monomères étant utilisée lors de la polymérisation en émulsion ;
la dispersion aqueuse de polymère contenant au moins un composé A, qui comprend au moins deux groupes fonctionnels, qui peuvent réaliser une réaction de réticulation avec les groupes céto ou avec les groupes aldéhyde ;
le rapport molaire entre les groupes réactifs avec les groupes céto ou avec les groupes aldéhyde du composé A et les groupes céto et aldéhyde du monomère c) étant de 1:10 à 2:1 ;
lors du contre-collage de films composites, au moins deux films étant collés l'un avec l'autre avec l'adhésif de stratification si solidement que la résistance au pelage, mesurée 24 h après la fabrication du stratifié et à 23 °C, soit de 2,5 N/15 mm ou plus ou que les films collés l'un avec l'autre ne puissent être séparés qu'en détruisant au

moins un des films.

2. Utilisation selon la revendication 1, **caractérisée en ce que** l'adhésif de stratification présente une adhésivité de moins de 1,7 N/25 mm, mesurée en tant que Loop Tack en une épaisseur d'application de 20 $\mu$m, appliqué sur un film de polyester d'une épaisseur de 12 $\mu$m, mesurée sur de l'acier à température ambiante (20 °C) avec une vitesse d'enlèvement de 300 mm/min.

3. Utilisation selon l'une quelconque des revendications 1 à 2, **caractérisée en ce que** les particules polymères sont fabriquées à partir de monomères comprenant :

   a) 60 à 99,8 % en poids, par rapport à la quantité totale de monomères, d'au moins un monomère choisi dans le groupe constitué par les acrylates d'alkyle en C1 à C20, les méthacrylates d'alkyle en C1 à C20, les esters de vinyle d'acides carboxyliques contenant jusqu'à 20 atomes C, les composés aromatiques de vinyle contenant jusqu'à 20 atomes C, les halogénures de vinyle, les éthers de vinyle d'alcools contenant 1 à 10 atomes C, les hydrocarbures aliphatiques contenant 2 à 8 atomes C et une ou deux doubles liaisons et les mélanges de ces monomères, et
   b) 0,1 à 5 % en poids, par rapport à la quantité totale de monomères, d'au moins un monomère contenant au moins un groupe acide, et
   c) 0,1 à 5 % en poids, par rapport à la quantité totale de monomères, d'au moins un composé éthyléniquement insaturé contenant au moins un groupe fonctionnel, choisi parmi les groupes céto et les groupes aldéhyde ;
   d) 0 à 10 % en poids, par rapport à la quantité totale de monomères, d'autres monomères différents des monomères a) à c) .

4. Utilisation selon l'une quelconque des revendications 1 à 3, **caractérisée en ce que** les monomères d) sont choisis dans le groupe constitué par l'acrylamide, le méthacrylamide, le N-méthylolacrylamide, le N-méthylolméthacrylamide, le mono(méth)acrylate de phényloxyéthylglycol, les monomères contenant des groupes hydroxyle, les monomères contenant des groupes amino, les nitriles d'acides carboxyliques en C3-C8 alpha,bêta-monoéthyléniquement insaturés, les monomères bifonctionnels, qui comprennent en plus d'une double liaison éthyléniquement insaturée au moins un groupe glycidyle, un groupe oxazoline, un groupe uréido ou un groupe analogue à uréido, et les monomères réticulants, qui comprennent plus d'un groupe polymérisable par voie radicalaire.

5. Utilisation selon l'une quelconque des revendications 1 à 4, **caractérisée en ce que** les monomères a) sont choisis parmi les acrylates d'alkyle en C1 à C8, les méthacrylates d'alkyle en C1 à C8 et le styrène, **en ce que** les monomères b) sont choisis parmi l'acide acrylique, l'acide méthacrylique et l'acide itaconique, et **en ce que** les monomères d) sont choisis parmi les (méth)acrylates d'hydroxyalkyle contenant 1 à 10 atomes C dans le groupe alkyle.

6. Utilisation selon l'une quelconque des revendications 1 à 5, **caractérisée en ce que** les monomères c) sont choisis dans le groupe constitué par l'acroléine, la méthacroléine, les vinylalkylcétones contenant 1 à 20 atomes C dans le radical alkyle, le formylstyrène, les esters alkyliques de l'acide (méth)acrylique contenant un ou deux groupes céto ou aldéhyde ou contenant un groupe aldéhyde et un groupe céto dans le radical alkyle, les N-oxoalkyl(méth)acrylamides, le (méth)acrylate d'acétoacétyle, le (méth)acrylate d'acétoacétoxyéthyle et le diacétone-acrylamide.

7. Utilisation selon l'une quelconque des revendications 1 à 6, **caractérisée en ce que** le composé A est choisi dans le groupe constitué par les composés contenant des groupes hydrazide, hydroxylamine, éther d'oxime ou amino.

8. Utilisation selon l'une quelconque des revendications 1 à 7, **caractérisée en ce que** le composé A est un dihydrazide d'acide dicarboxylique contenant 2 à 10 atomes C, et **en ce que** le monomère c) est choisi parmi le (méth)acrylate d'acétoacétyle, le (méth)acrylate d'acétoacétoxyéthyle et le diacétone-acrylamide.

9. Utilisation selon l'une quelconque des revendications 1 à 8, **caractérisée en ce que** le composé A est le dihydrazide de l'acide adipique et **en ce que** le monomère c) est le diacétone-acrylamide.

10. Utilisation selon l'une quelconque des revendications 1 à 9, **caractérisée en ce que** les particules polymères sont fabriquées à partir de monomères comprenant :

   a) 90 à 99,4 % en poids, par rapport à la quantité totale de monomères, d'au moins un monomère choisi dans le groupe constitué par les acrylates d'alkyle en C1 à C8, les méthacrylates d'alkyle en C1 à C8 et le styrène

et les mélanges de ces monomères, et

b) 0,5 à 3 % en poids, par rapport à la quantité totale de monomères, d'au moins un monomère choisi dans le groupe constitué par l'acide acrylique, l'acide méthacrylique et l'acide itaconique, et

c) 0,1 à 5 % en poids, par rapport à la quantité totale de monomères, d'au moins un composé éthyléniquement insaturé contenant au moins un groupe céto, choisi dans le groupe constitué par le (méth)acrylate d'acétoacétyle, le (méth)acrylate d'acétoacétoxyéthyle et le diacétone-acrylamide ;

d) 0 à 5 % en poids, par rapport à la quantité totale de monomères, d'autres monomères différents des monomères a) à c), choisis dans le groupe constitué par l'acrylamide, le méthacrylamide, le N-méthylolacrylamide et le N-méthylolméthacrylamide, le mono(méth)acrylate de phényloxyéthylglycol, les monomères contenant des groupes hydroxyle, les monomères contenant des groupes amino, les nitriles d'acides carboxyliques en C3-C8 alpha,bêta-monoéthyléniquement insaturés, les monomères bifonctionnels, qui comprennent en plus d'une double liaison éthyléniquement insaturée au moins un groupe glycidyle, un groupe oxazoline, un groupe uréido ou un groupe analogue à uréido, et les monomères réticulants, qui comprennent plus d'un groupe polymérisable par voie radicalaire,

et le composé A est un dihydrazide d'acide dicarboxylique contenant 2 à 10 atomes C.

**11.** Utilisation selon l'une quelconque des revendications 1 à 10, **caractérisée en ce que** le rapport molaire entre les groupes réactifs avec les groupes céto ou avec les groupes aldéhyde du composé A et les groupes céto et aldéhyde du monomère c) est de 1:1,3 à 1,3:1.

**12.** Utilisation selon l'une quelconque des revendications 1 à 11, **caractérisée en ce que** le matériau des films à coller est choisi dans le groupe constitué par le polyéthylène, le polypropylène orienté, le polypropylène non étiré, le polyamide, le polyéthylène téréphtalate, le polyacétate, la cellophane, les films métallisés et les films métalliques.

**13.** Utilisation selon l'une quelconque des revendications 1 à 12, **caractérisée en ce que** le polymère présente une température de transition vitreuse de -40 à +15 °C, de préférence de -10 à +10 °C, mesurée par calorimétrie différentielle à balayage en tant que température médiane selon ASTM D 3418-08 avec un taux de chauffage de 20 °C/minute lors de l'évaluation de la deuxième courbe de chauffage.

**14.** Procédé de fabrication de films composites, dans lequel au moins deux films sont collés l'un avec l'autre en utilisant l'adhésif de stratification monocomposant non auto-adhésif selon l'une quelconque des revendications 1 à 13.

**15.** Utilisation des films composites pouvant être obtenus selon les revendications 1 à 14 précédentes pour l'emballage de produits alimentaires.

**16.** Film composite, qui comprend un premier et au moins un deuxième film, qui sont collés l'un avec l'autre en utilisant l'adhésif de stratification selon l'une quelconque des revendications 1 à 13.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9823656 A
- WO 0050480 A
- JP H082538 A
- US 2004168762 A1
- US 2005192394 A1
- EP 2636714 A1
- EP 148386 A
- WO 2006066761 A
- DE 2722097 A
- DE 2061213 A
- DE 2207209 A


### In der Beschreibung aufgeführte Nicht-Patentliteratur


- Methoden der organischen Chemie. **HOUBEN-WEYL.** Makromolekulare Stoffe. Georg-Thieme-Verlag, 1961, vol. XIV/1, 411-420
- **T.G. FOX.** *Bull. Am. Phys. Soc.,* 1956, 123
- Ullmann's Encyclopädie der technischen Chemie. Verlag Chemie, 1980, vol. 19, 18
- Ullmann's Ecyclopedia of Industrial Chemistry. VCH Weinheim, 1992, vol. A21, 169
- **J. BRANDRUP ; E.H. IMMERGUT.** Polymer Handbook. J. Wiley, 1966
- POLYMER HANDBOOK. J. Wiley, 1975
- POLYMER HANDBOOK. J. Wiley, 1989